# EUROPÄISCHE PATENTSCHRIFT

(11) **EP 0 711 684 B1**
(45) Veröffentlichungstag und Bekanntmachung des Hinweises auf die Patenterteilung: **29.07.1998**
(21) Anmeldenummer: 95115530.8
(22) Anmeldetag: 02.10.1995
(51) Int. Cl.: B60R 9/00

(54) **Dachlastträger**
Roof carrier
Porte-bagages de toit

(30) Priorität: 12.11.1994 DE 4441410
(43) Veröffentlichungstag der Anmeldung: 15.05.1996
(73) Patentinhaber: Dr.Ing.h.c. F. Porsche Aktiengesellschaft, 70435 Stuttgart (DE)
(72) Erfinder: Wolf, Erhard, D-70374 Stuttgart (DE); Ludewig, Thilo, D-71229 Leonberg (DE)

(56) Entgegenhaltungen:
- DE-A- 3 520 132
- DE-A- 3 718 727
- DE-A- 4 316 947
- DE-A- 4 317 794
- DE-U- 8 715 013

## Beschreibung

Die Erfindung betrifft einen Dachlastträger an einem Personenkraftwagen, insbesondere Cabriolet, der zwei sich in Fahrzeuglängsrichtung erstreckende seitliche Rahmenteile und an diesen festgelegte, querverlaufende Tragelemente umfaßt, wobei die beiden seitlichen Rahmenteile lösbar am angrenzenden Aufbau des Personenkraftwagens in Lage gehalten sind.

Ein Dachlastträger der eingangs genannten Art geht aus dem deutschen Gebrauchsmuster G 87 14 471.9 hervor. Dieses beschreibt einen Dachlastträger für Cabriolets, der aus zwei mit Abstand voneinender angeordneten Längsträgerstreben sowie an diesen festgelegten Querträgerstreben besteht. Diese Längsträgerstreben sind einerseits an der A-Säule und andererseits an der B-Säule bzw. dem Überrollbügel befestigt.

Aus der DE-OS 37 39 364 ist ein Dachlastträger für ein Cabriolet bekannt, dessen rückwärtige Füße zur Abstützung am Fahrzeug in der Fuge des Kofferraumdeckels und dessen vordere Füße zur Abstützung am Dachrahmen im Bereich der A-Säule oder in der Fuge der Motorhaube festgelegt sind.

Die Dachlastträger beider Schriften sind aus runden bzw. rechteckigen Hohlprofilen zusammengesetzt und als Schwenkdachträger ausgebildet, um ein Zurück- und Vorklappen des Faltverdecks bei aufgesetztem Dachlasttrager zu ermöglichen.

Nachteilig an diesen bekannten Dachlastträgern ist, daß durch deren Herstellung aus runden bzw. rechteckigen Hohlprofilen aufwendige Schweiß- und Nietverbindungen oder zusätzliche Verbindungselemente erforderlich sind, die sowohl die Verwindungssteifigkeit als auch die maximale Tragkraft des Dachlastträgers mindern.

Ferner limitiert die Verwendung von runden bzw. recht eckigen Hohlprofilen eine freie Gestaltungsmöglichkeit und eine Herstellung schwieriger Formen, so daß eine optimale Anpassung des Dachlastträgers an das Fahrzeugstyling erheblich eingeschränkt ist.

Aufgabe der Erfindung ist es, einen Dachlastträger der eingangs genannten Art so weiterzubilden, daß die aufgeführten Nachteile vermieden werden, die für das Fahrzeug maximal mögliche und zulässige Dachlast aufnehmbar ist und der Dachlastträger so ausgeführt werden kann, daß das optische Aussehen des Fahrzeuges bei aufgesetztem Dachlastträger positiv beeinflußt wird.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die seitlichen Rahmenteile des Dachlastträgers einteilig aus Druckguß gefertigt werden.

Die Herstellung der seitlichen Rahmenteile aus Druckguß ermöglicht eine Auslegung des Rahmenprofils entsprechend den örtlichen mechanischen Anforderungen.

Die seitlichen Rahmenteile sind einstückig mit Fußabschnitten zur Befestigung am Fahrzeug und Stützabschnitten zur Befestigung der querverlaufenden Tragelemente ausgeführt.

Ein zur Fahrzeuglängsmittelebene offenes Hohlprofil aus einer Leichtmetallegierung (Al/Mg) ermöglicht eine Gestaltung der seitlichen Rahmenteile derart, daß bei einem gefälligen Aussehen und geringem Gewicht die erforderliche mechanische Festigkeit erreicht wird.

Die Fertigung aus Druckguß ermöglicht ferner, die seitlichen Rahmenteile stilistisch derart zu gestalten, daß das optische Aussehen des Fahrzeuges bei aufgesetztem Dachlastträger positiv beeinflußt wird. Die seitlichen Rahmenteile folgen in gleichmäßigem Abstand der Fahrzeugkontur, wodurch sich eine gedrungene Bauform ergibt.

Die Befestigung des Dachlastträgers am Personenkraftwagen erfolgt über speziell ausgebildete Aufnahmen jeweils an beiden Fahrzeugseiten am oberen Ende des Windschutzscheibenrahmens (A-Säule) und an der Oberseite des Fondseitenteils, an denen, zu den Aufnahmen passende, an den Fußenden der seitlichen Rahmenteile angebrachte Halteelemente befestigt werden.

Ein Ausführungsbeispiel der Erfindung ist in der Zeichnung dargestellt und wird im folgenden näher beschrieben.

Es zeigt
Fig.1 eine perspektivische Teilansicht des Dachlastträgers,
Fig.2 eine perspektivische Ansicht einer vorderen Dachlastträgeraufnahme,
Fig.3 einen Schnitt III-III nach der Fig. 2,
Fig.4 einen Schnitt durch die hintere Dachlastträgeraufnahme und
Fig.5 einen Profilquerschnitt eines querverlaufenden Tragelements

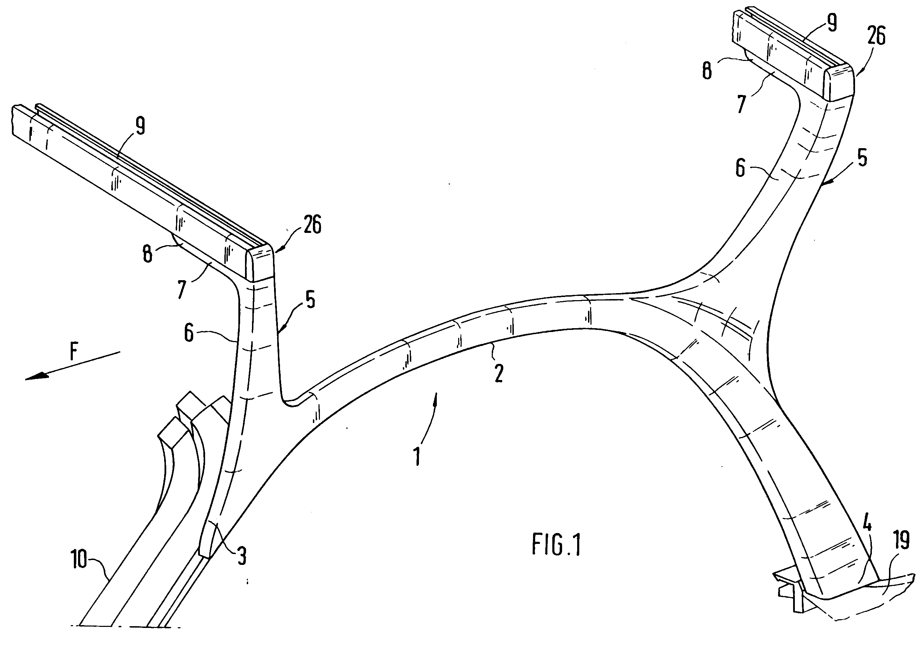

Figur 1 zeigt eine Hälfte eines Dachlastträgers 1 für einen Personenkraftwagen, insbesondere ein Cabriolet oder ein mit einem Hardtop versehenes offenes Fahrzeug. Zwei sich in Fahrzeuglängsrichtung erstreckende seitliche Rahmenteile 2 (in Fig.1 ist eines gezeigt) weisen Fußabschnitte 3, 4 auf, die zur Befestigung des Dachlastträgers 1 an der Fahrzeugkarosserie dienen. Integral an den seitlichen Rahmenteilen 2 sind Stützabschnitte 5 für querverlaufende Tragelemente 9 angebracht. Diese voneinender beabstandeten Stützabschnitte 5 sind so ausgebildet, daß die querverlaufenden Tragelemente 9 voneinander einen ausreichenden Abstand zur Befestigung längerer Lasten aufweisen und bei waagrecht stehendem Fahrzeug in einer waagrechten Ebene zu liegen kommen.

Die beiden Stützabschnitte 5 sind jeweils winkelförmig ausgebildet und setzen sich aus einem ersten aufrecht verlaufenden Abschnitt 6 und einem zweiten querverlaufenden Abschnitt 7 zusammen, wobei der zweite Abschnitt 7 etwa horizontal ausgerichtet ist und sich mit seinem freien Ende 8 in Richtung Fahrzeuglängsmittelebene erstreckt.

Zur Befestigung des Dachlastträgers 1 am Fahrzeug weist dieses vordere und hintere Aufnahmen 11, 12 auf, an denen die vorderen und hinteren Fußabschnitte 3,4 des Dachlastträgers 1 befestigbar sind.

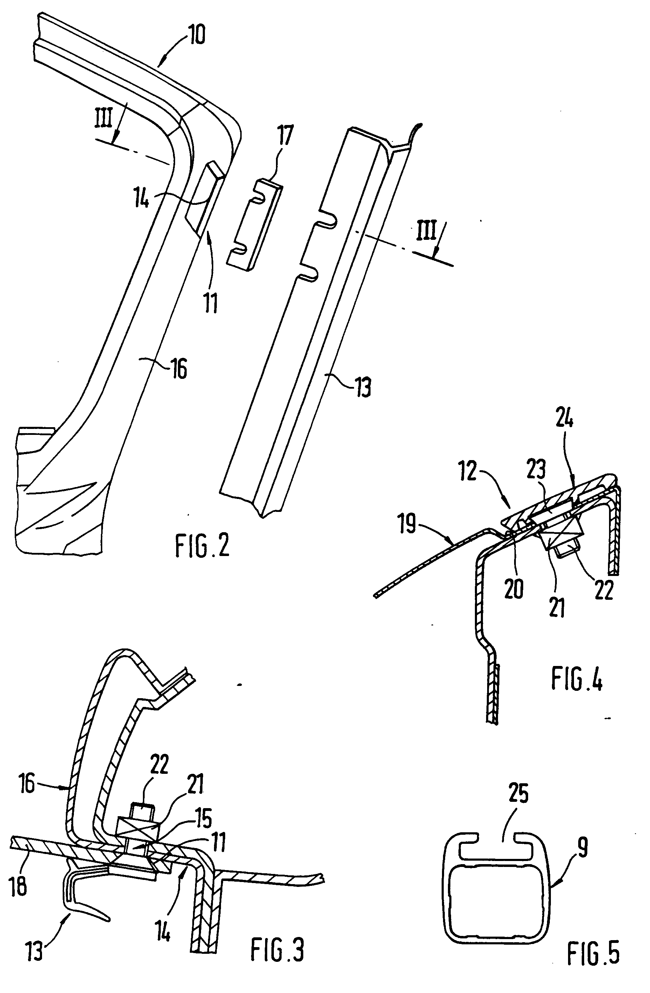

Die vorderen Aufnahmen 11 sind an einem oberen, seitlich außenliegenden Bereich des Windschutzscheibenrahmens 10 angebracht. Wie die Figuren 2 und 3 zeigen, liegen die Aufnahmen 11 hinter dem Türdichtungsprofil 13 in einem Bereich, der nur bei geöffneter seitlicher Fahrzeugtüre zugänglich ist (Diebstahlschutz). Die Aufnahmen 11 bestehen aus mit Schraubbefestigungen 15 versehenen Einprägungen 14 an der A-Säule 16. Jede Schraubbefestigung 15 umfaßt zwei in der Einprägung 14 in Lage gehaltene Schweißmuttern 21, in die Befestigungsschrauben 22 eingedreht sind.

Bei nicht aufgesetztem Dachlastträger 1 wird, um ein Einfallen des Dichtungsprofils 13 im Bereich der Einprägung 14 zu verhindern, ein Füllstück 17 in die Einprägung 14 eingesetzt, das vor der Montage des Dachlastträgers 1 entfernt wird.

Bei der Montage des Dachlastträgers 1 wird, nach Entfernung des Füllstücks 17, mittels der Schraubbefestigung 15 ein am vorderen Fußabschnitt 3 des Dachlastträgers 1 angebrachtes Verbindungsteil 18 an der A-Säule 16 festgeschraubt. Dieses Verbindungsteil 18 kann integral am seitlichen Rahmenteil 2 angegossen, aber auch separat ausgebildet sein.

Mittels der Befestigungsschrauben 22 wird entweder das Füllstück 17 oder der vordere Fußabschnitt 3 des Dachlastträgers 1 an der A-Säule 16 des Windschutzscheibenrahmens 10 in Lage gehalten.

Fig. 4 zeigt eine hintere, jeweils an den Fondseitenteilen 19 ausgebildete Aufnahme 12 für den hinteren Fußabschnitt 4 eines seitlichen Rahmenteils 2 des Dachlastträgers 1.

Das Fondseitenteil 19 weist eine örtliche Vertiefung 20 und zwei im Bereich der Vertiefung 20 befestigte Schweißmuttern 21 (eine gezeigt) auf. In die Schweißmuttern 21 sind Schrauben 22, die einen konischen Schraubenkopf 23 aufweisen, eingedreht.

Vergleichbar den vorderen Fußabschnitten 3 sind die hinteren Fußabschnitte 4 über Verbindungsteile mittels Schrauben an der Karosserie festlegbar. Die Verbindungsteile können wiederum integrale am seitlichen Rahmenteil 2 angegossen, oder auch separat ausgebildet sein.

Die Aufnahme 12 wird bei nicht installiertem Dachlast träger 1 durch einen Schieber 24, der mit den konischen Kopfabschnitten 23 der Schrauben 22 zusammenwirkt, abgedeckt. Der Schieber 24 ist, vergleichbar dem Füllstück 17 nur bei geöffneter seitlicher Fahrzeugtür in Fahrzeuglängsrichtung in eine Freigabestellung bewegbar und danach entfernbar (Diebstahlschutz). Der hintere Fußabschnitt 4 des Dachlastträgers 1 ist entweder durch die Schrauben 22 oder durch anders geformte Schrauben an der Aufnahme 12 festsetzbar

Das Querschnittsprofil der seitlichen Rahmenteile 2 ist entsprechend der bei Belastung des Dachlastträgers 1 auftretenden Kräfte ausgelegt; es erweitert sich vom Windschutzscheibenrahmen 9 nach hinten hin kontinuierlich und weist einen gebogenen Verlauf auf. Der gebogene Verlauf ist aus optischen Gründen in etwa dem Verlauf des angrenzenden Randbereiches der Türfensterscheibe angepaßt.

In gleicher Weise erfolgt die Auslegung und Gestaltung der vorderen und hinteren Stützabschnitte 5, die sich nach unten hin kontinuierlich erweitern.

Die seitlichen Rahmenteile 2 sind aus einer Leichtmetallegierung (Mg,Al Legierung) gefertigt und weisen eine relativ dünne Wanddicke (ca. 3mm bis 4mm) auf.

Die an den Stützabschnitten 5 der seitlichen Rahmenteile 2 befestigten querverlaufenden Tragelemente 9 bestehen aus hohlen Strangpreßprofilen (siehe Fig. 5), die eine Aufnahmenut 25 für handelsübliche Spezialhalter aufweist, wie z.B. für Dachkoffer, Skier, Fahrräder, Surfbretter usw..
Die Strangpreßprofile sind an ihren seitlichen Enden durch eingesteckte Abdeckelemente 26 verschlossen und abschließbar (Diebstahlschutz).

### Bezugszeichen:

- 1: Dachlastträger
- 2: Rahmenteile seitliche
- 3: Fußabschnitt vorne
- 4: Fußabschnitt hinten
- 5: Stützabschnitte
- 6: aufrecht verlaufende erste Stützabschnitte
- 7: quer verlaufende zweite Stützabschnitte
- 8: freien Enden der querverlaufenden zweiten Stützabschnitte
- 9: querverlaufenden Tragelemente
- 10: Windschutzscheibenrahmen
- 11: Aufnahme Windschutzscheibenrahmen
- 12: Aufnahmen Fond
- 13: Türdichtungsprofil
- 14: Einprägung
- 15: Schraubbefestigung
- 16: A-Säule
- 17: Füllstück
- 18: Verbindungsteil
- 19: Fond-Seitenteil
- 20: Vertiefung
- 21: Schweißmutter
- 22: Schraube/Befestigungschraube
- 23: konischer Kopfabschnitt der Schraube
- 24: Schieber
- 25: Aufnahmenut
- 26: Abdeckelement

## Patentansprüche

1. Dachlastträger an einem Personenkraftwagen, insbesondere Cabriolet, der zwei sich in Fahrzeuglängsrichtung erstreckende seitliche Rahmenteile (2) und an diesen festgelegte, querverlaufende Tragelemente (9) umfaßt, wobei die beiden seitlichen Rahmenteile (2) lösbar am angrenzenden Aufbau des Personenkraftwagens in Lage gehalten sind,
**dadurch gekennzeichnet**,
daß die seitlichen Rahmenteile (2) durch großflächige Druckgußteile gebildet werden, wobei jedes seitliche Rahmenteil (2) einen angeformten vorderen und einen hinteren Stützabschnitt (5) aufweist, an dem die querverlaufenden Tragelemente (9) aufliegen und daran befestigt sind.

2. Dachlastträger nach Anspruch 1, **dadurch gekennzeichnet**, daß die beiden Stützabschnitte (5) jeweils winkelförmig ausgebildet sind und sich aus einem ersten aufrecht verlaufenden Abschnitt (6) und einem zweiten querverlaufenden Abschnitt (7) zusammensetzen, wobei der zweite Abschnitt (7) etwa horizontal ausgerichtet ist und sich mit seinem freien Ende (8) in Richtung Fahrzeuglängsmittelebene erstreckt.

3. Dachlastträger nach Anspruch 1, **dadurch gekennzeichnet**, daß ein vorderes Ende des seitlichen Rahmenteils (2) über einen aufgesetzten Fußabschnitt (3) an einer Aufnahme (11) des Windschutzscheibenrahmens (10) lösbar befestigt ist.

4. Dachlastträger nach Anspruch 3, **dadurch gekennzeichnet**, daß die an einer A-Säule (16) des Windschutzscheibenrahmens (10) vorgesehene Aufnahme (11) nur bei geöffneter seitlicher Fahrzeugtüre zugänglich ist.

5. Dachlastträger nach den Ansprüchen 3 und 4, **dadurch gekennzeichnet**, daß bei nicht aufgesetztem Dachlastträger (1) ein Füllstück (17) in die Aufnahme (11) eingesetzt ist, das bei der Montage des Dachlastträgers (1) entfernt wird.

6. Dachlastträger nach Anspruch 1, **dadurch gekennzeichnet**, daß ein hinteres Ende des seitlichen Rahmenteils (2) an einer an der Oberseite des Fondseitenteils (19) ausgebildeten Aufnahme (12) lösbar befestigt ist.

7. Dachlastträger nach Anspruch 6, **dadurch gekennzeichnet**, daß die am Fondseitenteil (19) ausgebildeten Aufnahmen (12) durch einen Schieber (24) in ihre Nichtgebrauchsstellung abgedeckt sind und daß der Schieber (24) lediglich bei geöffneter seitlicher Fahrzeugtür in eine Freigabestellung bewegbar ist.

8. Dachlastträger nach einem oder mehreren der vorangegangenen Ansprüche **dadurch gekennzeichnet**, daß sich der Querschnitt des seitlichen Rahmenteiles (2) vom Windschutzscheibenrahmen (10) nach hinten hin kontinuierlich erweitert und daß das Rahmenteil (2) einen gebogenen Verlauf aufweist, der in etwa dem Verlauf des angrenzenden Randbereiches der Türfensterscheibe entspricht.

9. Dachlastträger nach Anspruch 2, **dadurch gekennzeichnet**, daß sich der erste aufrecht verlaufende Stützabschnitt (6) der vorderen und hinteren Stützabschnitte (5) nach unten hin kontinuierlich erweitert.

10. Dachlastträger nach Anspruch 7, **dadurch gekennzeichnet**, daß der Schieber (24) mit mindestens einem Kopfabschnitt (23) einer in eine Schweißmutter (21) eingedrehten Schraube (22) längsverschiebbar zusammenwirkt, wogegen der Schieber (24) in Querrichtung durch den Kopfabschnitt (23) fixiert ist.

11. Dachlastträger nach Anspruch 1 **dadurch gekennzeichnet**, daß die Rahmenteile (2) aus einer Leichtmetallegierung (Mg, Al-Legierung) gefertigt sind.

## Claims

1. A roof rack on a passenger car, in particular a cabriolet, which comprises two lateral frame parts (2) extending in the longitudinal direction of the vehicle and transversely extending support members (9) secured thereto, wherein the two lateral frame parts (2) are held in position in a detachable manner on the adjacent body of the passenger car, **characterized in that** the lateral frame parts (2) are formed by die-cast parts of large area, wherein each lateral frame part (2) has a front and a rear support portion (5) which are integrally moulded thereon and on which the transversely extending support members (9) rest and are secured thereto.

2. A roof rack according to Claim 1, **characterized in that** the two support portions (5) are each angled and are formed by a first vertically extending portion (6) and a second transversely extending portion (7), wherein the second portion (7) is orientated substantially horizontally and extends with the free end (8) in the direction of the longitudinal median plane of the vehicle.

3. A roof rack according to Claim 1, **characterized in that** a front end of the lateral frame part (2) is detachably secured to a receiving means (11) of the windscreen frame (10) by way of a base portion (3) mounted on the said lateral frame part (2).

4. A roof rack according to Claim 3, **characterized in that** the receiving means (11) provided on an A-column (16) of the windscreen frame (10) is accessible only when the side door of the vehicle is opened.

5. A roof rack according to Claims 3 and 4, **characterized in that** when the roof rack (1) is not mounted a filler member (17) is inserted into the receiving means (11) and is removed when the roof rack (1) is assembled.

6. A roof rack according to Claim 1, **characterized in that** a rear end of the lateral frame part (2) is detachably secured to a receiving means (12) formed on the top of the rear side part (19).

7. A roof rack according to Claim 6, **characterized in that** the receiving means (12) formed on the rear side part (19) is covered by a slide (24) in its position of non-use, and the slide (24) is movable into a release position only when the side door of the vehicle is opened.

8. A roof rack according to one or more of the preceding Claims, **characterized in that** the cross-section of the lateral frame part (2) is continuously widened from the windscreen frame (10) towards the rear, and the frame part (2) has a curved shape which corresponds substantially to the shape of the adjacent edge area of the window pane of the door.

9. A roof rack according to Claim 2, **characterized in that** the first vertically extending support portion (6) of the front and rear support portions (5) is continuously widened downwards.

10. A roof rack according to Claim 7, **characterized in that** the slide (24) cooperates in a longitudinally displaceable manner with at least one head portion (23) of a bolt (22) screwed into a weld nut (21), whereas the slide (24) is fixed by the head portion (23) in the transverse direction.

11. A roof rack according to Claim 1, **characterized in that** the frame parts (2) are produced from a light-metal alloy (Mg, Al-alloy).

## Revendications

1. Porte-bagage de toit d'une voiture de tourisme en particulier d'un cabriolet qui comprend deux parties de cadre (2) latérales s'étendant dans le sens de la longueur du véhicule et des éléments porteurs (9) s'étendant transversalement fixés sur celles-ci, les deux parties de cadre (2) latérales étant maintenues en position de manière amovible sur la carrosserie adjacente de la voiture de tourisme, caractérisé en ce que les parties de cadre (2) latérales sont formées par des pièces moulées sous pression de grande surface, chaque partie de cadre (2) latérale présentant une portion d'appui (5) avant et une portion d'appui (5) arrière, formées d'un seul tenant sur lesquelles reposent et sont fixés les éléments porteurs (9) transversaux.

2. Porte-bagage de toit selon la revendication 1, caractérisé en ce que les deux portions d'appui (5) sont chacune en forme d'équerre et se composent d'une première partie (6) s'étendant verticalement et d'une deuxième partie (7) transversale, la deuxième partie (7) étant orientée à peu près horizontalement et s'étendant avec son extrémité libre (8) en direction du plan médian longitudinal du véhicule.

3. Porte-bagage de toit selon la revendication 1, caractérisé en ce qu'une extrémité avant de la partie de cadre (2) latérale est fixée de manière amovible, par une portion de pied (3) placée dessus, sur un logement (11) du cadre (10) du pare-brise.

4. Porte-bagage de toit selon la revendication 3, caractérisé en ce que le logement (11) prévu sur un montant A (16) du cadre (10) du pare-brise, n'est accessible que lorsque la portière latérale du véhicule est ouverte.

5. Porte-bagage de toit selon les revendications 3 et 4, caractérisé en ce que dans le cas où le porte-bagage de toit (1) n'est pas mis en place, une pièce de remplissage (17) est insérée dans le logement (11), pièce qui est enlevée lors du montage du porte-bagage de toit (1).

6. Porte-bagage de toit selon la revendication 1, caractérisé en ce qu'une extrémité arrière de la partie de cadre (2) latérale est fixée de manière amovible sur un logement (12), formé sur la face supérieure de la partie latérale arrière (19).

7. Porte-bagage de toit selon la revendication 6, caractérisé en ce que les logements (12), formés sur la partie latérale arrière (19), sont recouverts par un coulisseau (24) dans leur position de non-utilisation et en ce que le coulisseau (24) est déplaçable dans une position de libération, uniquement lorsque la portière latérale du véhicule est ouverte.

8. Porte-bagage de toit selon une ou plusieurs des revendications précédentes, caractérisé en ce que la section transversale de la partie de cadre (2) latérale s'élargit en continu depuis le cadre (10) du pare-brise vers l'arrière et en ce que la partie de cadre (2) présente un parcours en arc, qui correspond à peu près au parcours de la zone de bordure adjacente de la vitre de portière.

9. Porte-bagage de toit selon la revendication 2, caractérisé en ce que la première portion d'appui (6), s'étendant verticalement des sections d'appui (5) avant et arrière s'élargit en continu vers le bas.

10. Porte-bagage de toit selon la revendication 7, caractérisé en ce que le coulisseau (24) coopère par coulissement longitudinal avec au moins une portion de tête (23) d'une vis (22), vissée dans un écrou à souder (21), tandis que le coulisseau (24) est fixé dans la direction transversale par la portion de tête (23).

11. Porte-bagage de toit selon la revendication 1, caractérisé en ce que les parties de cadre (2) sont fabriquées dans un alliage de métal léger (alliage de Mg, Al).
